# DEMANDE DE BREVET EUROPEEN

(11) **EP 1 930 850 A1**
(43) Date de publication de la demande: **11.06.2008**
(21) Numéro de dépôt: 06360058.9
(22) Date de dépôt: 08.12.2006
(51) Int. Cl.: G06Q 30/00

(54) **Procédé de communication ciblee**

(71) Demandeur: Bechler, Michael, 68150 Ribeauville (FR); Valdan, Damien, 67000 Strasbourg (FR); Valdan, Lionel, 67140 Gertwiller (FR)
(72) Inventeur: Bechler, Michael, 68150 Ribeauville (FR); Valdan, Damien, 67000 Strasbourg (FR); Valdan, Lionel, 67140 Gertwiller (FR)
(74) Mandataire: Nithardt, Roland

(57) **Abrégé**

Ce procédé de communication comportant notamment :
(a) - une première phase de création par un utilisateur (10), d'une banque de données (20) contenant des fiches individuelles de clients et/ou de prospects (11, 12, 13, 14, 15, .. N),
(b) - une deuxième phase de création par l'utilisateur (10) d'un support médiatique personnalisé (11a, 12a, 13a, 14a, 15a,. Na), ce support médiatique personnalisé étant destiné à un client ou un prospect de ladite banque de données (20),
est caractérisé en ce qu'il comporte en plus :
(c) - une troisième phase d'attribution par l'utilisateur, d'un identifiant (11b, 12b, 13b, 14b, 15b,.. Nb) et d'un code d'accès (11c, 12c, 13c, 14c, 15c,..Nc) spécifiques à chaque client ou prospect, et
(d) - une quatrième phase qui consiste à envoyer ledit support médiatique personnalisé muni de son identifiant et de son code d'accès respectivement aux clients et/ou prospects ciblés pour les inciter à entrer sur un site Internet de l'utilisateur au moyen de l'identifiant et du code d'accès attribués, compléter les fiches individuelles et créer des portails Internet qui regroupent les sites Internet élaborés pour ces clients et/ou prospects.

## Description

### Domaine technique

La présente invention concerne un procédé de communication ciblée, mis en oeuvre dans le cadre d'une campagne de prospection commerciale par un utilisateur, ce procédé comportant :
(a) - une première phase de création par cet utilisateur d'une banque de données contenant des fiches individuelles de clients et/ou de prospects,
(b) - une deuxième phase de création par l'utilisateur d'un support médiatique personnalisé, ce support médiatique personnalisé étant destiné à un client ou un prospect de ladite banque de données.

### Technique antérieure

De nombreux procédés de communication consistent à utiliser des supports en papier pour transmettre par exemple des offres commerciales ponctuelles à des clients potentiels, à partir d'un fichier d'adresses acheté ou élaboré en interne. D'autres procédés utilisent l'outil Internet pour communiquer avec des cibles commerciales. La plupart de ces méthodes peuvent être qualifiées de statiques ou du moins peu évolutives. La mise à jour des fichiers d'adresses est laborieuse et longue et les données qu'ils contiennent sont rapidement obsolètes. En outre le taux de retour qui mesure l'efficacité d'une campagne publicitaire se révèle extrêmement faible, de sorte que l'investissement consenti est souvent démesuré par rapport au résultat atteint. La publicité est souvent très générale dans le but d'atteindre un plus grand nombre de clients. Or c'est là précisément la raison pour laquelle la part la plus importante des documents publicitaires transmis passe à côté de la cible. En effet, l'importance et la diversité de l'offre commerciale qui sollicite le client potentiel, en quasi-permanence, font que seules les publicités très ciblées peuvent atteindre un client parce qu'il est précisément intéressé, au moment où il reçoit la documentation, par le produit présenté par cette publicité. Il s'agit forcément d'un petit nombre de personnes, le plus grand nombre de personnes n'attache aucun intérêt au document médiatique et le jette. Ces procédés dits statiques sont très peu rentables et l'énergie mise en oeuvre pour un résultat médiocre est considérable.

### Exposé de l'invention

La présente invention se propose de pallier ces inconvénients en offrant un procédé tel que défini en préambule et qui permet de cibler une clientèle d'une manière efficace et rapide et de communiquer de façon régulière avec elle en tenant à jour les fichiers de données personnalisées, ce qui rend le procédé dynamique et interactif.

Ce but est atteint par le procédé selon l'invention, caractérisé en ce qu'il comporte :
(c) - une troisième phase d'attribution par l'utilisateur d'un identifiant et d'un code d'accès spécifiques à chaque client ou prospect, et
(d) - une quatrième phase qui consiste à envoyer ledit support médiatique personnalisé muni de son identifiant et de son code d'accès respectivement aux clients et /ou prospects respectifs ciblés.

Dans un mode de réalisation préféré du procédé, l'on incite ledit client et/ou prospect ayant reçu ledit support médiatique personnalisé, à entrer sur un site Internet de l'utilisateur au moyen de l'identifiant et du code d'accès qui lui ont été attribués et on complète la fiche individuelle dudit client et/ou prospect par des données complémentaires qui lui sont demandées au moment de sa connexion audit site Internet de l'utilisateur.

De ce fait le site Internet de l'utilisateur se profile automatiquement à partir des renseignements de la fiche individuelle de l'internaute qui s'y connecte, ce qui augmente la personnalisation et améliore l'accueil du visiteur en s'adressant personnellement à lui.

D'une manière particulièrement avantageuse, l'on utilise les informations contenues sur chacune desdites fiches individuelles dudit client et/ou prospect, ces données comprenant les données initiales et lesdites données complémentaires, pour créer un site Internet de ces clients et/ou prospects.

D'une manière préférentielle, l'on crée des portails Internet qui regroupent les sites Internet élaborés pour le compte de clients et/ou de prospects.

De façon préférentielle, l'on crée lesdits portails Internet selon des critères prédéterminés adaptés aux clients et/ou aux prospects.

L'on peut classer les sites Internet élaborés pour le compte de clients et/ou de prospects selon des critères de localisation géographique pour créer les portails Internet. L'on peut également classer les sites Internet élaborés pour le compte de clients et/ou de prospects selon des critères d'activités professionnelles et/ou des critères d'intérêts tels que par exemple les voyages, les sports, le cinéma, le théâtre ou similaires pour créer les portails Internet.

D'autres critères pourraient être utilisés en fonction des intérêts et/ou de spécificités des clients et/ou des prospects.

### Description sommaire des dessins

La présente invention et ses avantages seront mieux compris à la lecture de la description détaillée de mises en oeuvre préférées du dispositif de l'invention, en référence aux dessins annexés donnés à titre indicatif et non limitatif, dans lesquels :
- la figure 1 est une vue schématique illustrant la première étape de mise en oeuvre du procédé de l'invention,
- la figure 2 est une vue schématique illustrant le procédé de l'invention dans sa globalité.

### Meilleures manières de réaliser l'invention

Le procédé de communication ciblée selon l'invention débute par la création d'une banque de données clients à partir de fiches individuelles correspondant chacune à un client déterminé ou à un prospect identifié et susceptible d'être concerné par exemple par une campagne de prospection commerciale ou par tout autre échange d'informations ou de produits. A la place de la création d'une banque de données, l'utilisateur peut également s'appuyer sur une banque de données existante créée antérieurement ou acquise auprès d'un organisme spécialisé. Les fiches individuelles comportent au minimum l'identité de clients et/ou de prospects ainsi que leur activité. Il est bien sûr avantageux que ces données soient actualisées régulièrement et de préférence complétées.

Dans ce but, le procédé prévoit au moins une phase destinée à compléter les fiches individuelles portant les données de base et à mieux cibler à la fois les activités et les centres d'intérêts des clients et/ou des prospects. Dans la pratique, l'adjonction de données en vue de compléter les informations enregistrées dans la base de données englobe une étape qui consiste à créer un support médiatique personnalisé adapté à chaque client déterminé et à son activité, ce support médiatique, réalisé de préférence sur papier, ou sur n'importe quel autre support, lui étant transmis par les voies habituelles du courrier postal ou par tout autre moyen connu, Internet ou messagerie, par exemple. De ce fait, l'utilisateur du procédé devient un éditeur-émetteur du support médiatique personnalisé. Pour inciter le client ou le prospect à fournir des informations complémentaires permettant de compléter sa propre fiche individuelle de la banque de données, l'éditeur- émetteur du support médiatique personnalisé attribue à ce client déterminé un identifiant et un code d'accès spécifiques qui sont apposés sur le support médiatique personnalisé transmis. L'identifiant et le code d'accès permettent au bénéficiaire, à savoir le client ou le prospect, d'accéder au site Internet de l'éditeur-émetteur du support médiatique personnalisé, et de démarrer une relation d'échange et de communication.

La transmission du support médiatique personnalisé associé à l'identifiant et au code d'accès, constitue pour l'éditeur- émetteur un moyen pour inciter ledit client ou prospect déterminé ayant reçu ce support médiatique, à entrer sur son site Internet en utilisant l'identifiant et le code d'accès qui lui ont été attribués. Au moment de sa connexion, l'éditeur- émetteur peut demander au client ou prospect un certain nombre d'informations qui permettent de compléter la fiche individuelle du client ou prospect par des données complémentaires qui lui sont demandées. Ces données seront ensuite utilisées lors de prochaines connexions au site pour affiner toujours plus le degré de personnalisation de l'accueil en ligne.

Au cours de la relation d'échange et de communication via Internet, le client ou prospect ciblé reçoit des informations de la part de l'éditeur-émetteur du support médiatique personnalisé qui correspondent à ses centres d'intérêts, à sa localisation, à son métier et à toutes informations personnelles qui permettent de classer le client ou prospect dans une ou plusieurs catégories déterminées. En retour, il communique des données qui permettent de compléter sa fiche individuelle. A partir de ces données complétées, l'éditeur-émetteur du support médiatique personnalisé étoffe des offres commerciales ou des données spécifiques de plus en plus ciblées et les communique au client ou prospect afin que ce dernier reçoive des propositions de plus en plus personnalisées. De ce fait le procédé de communication peut être qualifié de dynamique, par opposition aux procédés classiques d'envoi de documentation publicitaire qui peuvent être qualifiés de statique.

En outre, le procédé comprend une phase de création et de mise à disposition d'un site Internet élaboré automatiquement pour le compte du client ou prospect qui est entré dans le processus décrit ci-dessus. En effet, l'éditeur-émetteur du support médiatique personnalisé dispose d'un outil de création de sites Internet qu'il met à la disposition des clients ou des prospects disposant de l'identifiant et du code d'accès et qui sont entrés dans cette phase d'échange et de communication ayant permis de compléter leur fiche individuelle. Ce site Internet pourra être administré par le client ou le prospect qui devient dès lors administrateur de son site Internet, complétant toujours plus son contenu. L'objectif final est de positionner le site du client ou du prospect en lui offrant un référencement optimal.

Enfin, le procédé comprend une étape de création de portails Internet qui recensent les fichiers de Sites Internet créés pour des clients ou des prospects et une étape de classement de ces fichiers par thèmes et/ou par zones géographiques, notamment par région. Le but de cette démarche est de faciliter la recherche pour les utilisateurs d'Internet, couramment appelés Internautes, et de donner aux clients un moyen efficace d'être trouvés par ces utilisateurs. En effet, si la recherche d'un Internaute consiste par exemple à localiser un artisan spécialisé dans sa région, le portail Internet thématique permettra de trouver facilement le garagiste ou le menuisier implanté dans sa région, alors que les actuels moteurs de recherche lui fournissent une masse d'informations parmi lesquelles il lui sera difficile sinon impossible de localiser celle qui lui convient le mieux.

En résumé, le procédé se décompose donc en plusieurs phases :
(a) - une première phase de création d'une banque de données de clients ou de prospects par l'utilisateur du procédé,
(b) - une deuxième phase de création d'un support médiatique personnalisé destiné à un client ciblé ou un prospect de ladite banque de données mentionnée sous (a) par l'utilisateur du procédé qui devient un éditeur dudit support médiatique personnalisé,
(c) - une troisième phase d'attribution d'un identifiant et d'un code d'accès spécifiques à ce client ou ce prospect par l'utilisateur du procédé qui devient un émetteur dudit support médiatique personnalisé mentionné sous (b),
(d) - une quatrième phase qui consiste envoyer ledit support médiatique muni de son identifiant et de son code d'accès personnalisés aux clients et /ou prospects respectifs,
(e) - une cinquième phase, qui peut comporter plusieurs étapes et qui consiste à échanger des informations et à communiquer entre le client ou le prospect et l'utilisateur du procédé, qui est en outre l'éditeur-émetteur du support médiatique personnalisé. Une communication pourra également être établie, le cas échéant, avec des intermédiaires qui transmettront au client et/ou au prospect des offres commerciales ciblées etc.,
(f) - une sixième phase qui consiste à créer et à mettre à la disposition du client ou du prospect un site Internet élaboré sur la base des données personnalisées contenues dans les fiches individuelles de la banque de données,
(g) - une septième phase qui consiste à permettre au client ou au prospect d'administrer son site Internet en lui assurant un référencement optimal,
(h) - une huitième phase qui consiste à créer des portails Internet qui recensent les fichiers de sites Internet élaborés pour des clients ou des prospects et à classer ces fichiers selon des critères prédéterminés, par exemple par thèmes ou par zones géographiques, notamment par régions, ces portails étant mis à jour en temps réel avec le contenu des informations éditées par les clients ou les prospects auxquels l'administration de leur site Internet a été confiée (phase (g) ci-dessus).

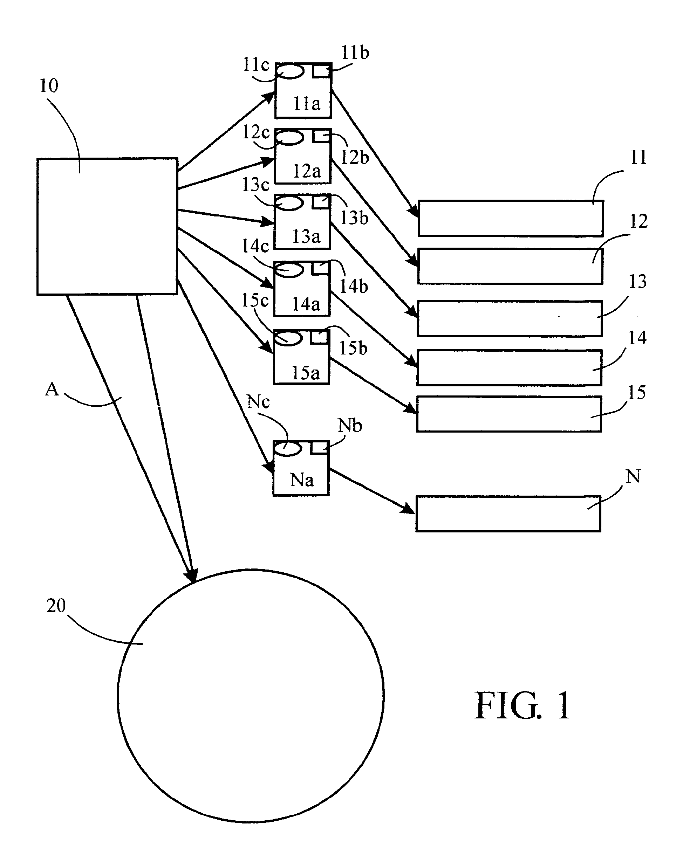

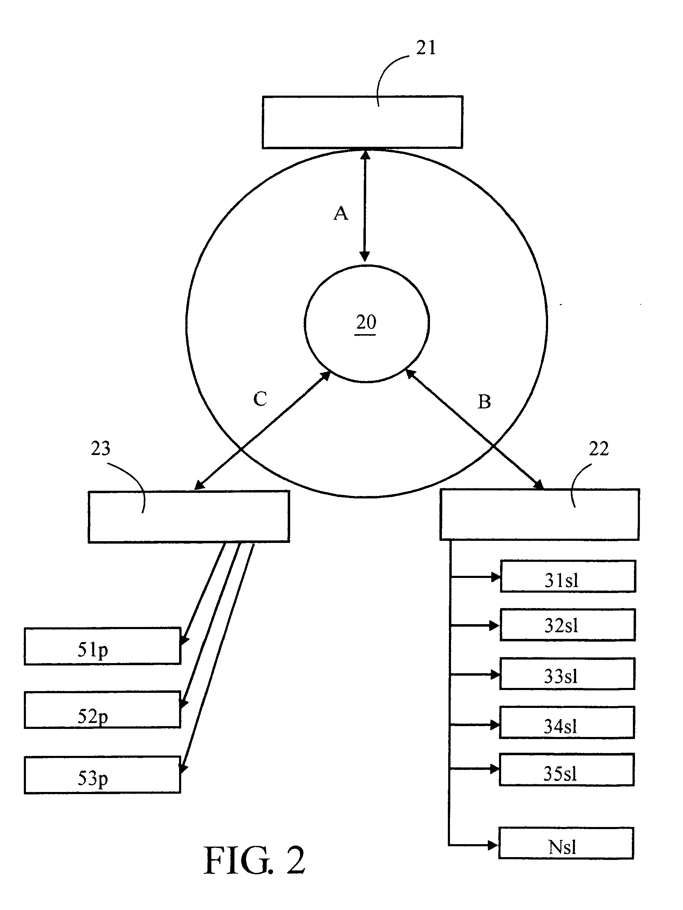

Le procédé de l'invention peut être illustré par les figures 1 et 2. La figure 1 illustre les phases (a) à (e). L'utilisateur 10 du procédé, qui sera appelé par la suite un éditeur- émetteur, puise, comme le montre la flèche A, des informations ciblées relatives à des clients ou prospects 11, 12, 13, 14, 15,.. N, dans une banque de données 20 et crée des supports médiatiques sur papier, par exemple, 11 a, 12a, 13a, 14a, 15a,.. Na, ciblés pour chacun de ces clients ou prospects 11, 12, 13, 14, 15,.. N. Chacun de ces supports médiatiques 11 a, 12a, 13a, 14a, 15a,.. Na, ciblés comporte respectivement un identifiant 11 b, 12b, 13b, 14b, 15b,.. Nb et un code d'accès 11 c, 12c, 13c, 14c, 15c,.. Nc. Ces supports médiatiques 11 a, 12a, 13a, 14a, 15a, Na, ciblés sont transmis par les voies habituelles aux clients ou prospects 11, 12, 13, 14, 15,.. N, respectivement. Cette phase a pour but de déclencher la phase (e) d'échange d'informations entre l'éditeur- émetteur 10 et les clients /ou prospects 11, 12, 13, 14, 15,.. N.

La figure 2 illustre l'ensemble du procédé et notamment les phases suivantes (e) à (g) du procédé. Le bloc 21 correspond aux étapes illustrées plus en détail par la figure 1. La flèche A correspond aux échanges entre l'éditeur-émetteur, les clients ou prospects et la banque de données 20. Le bloc 22 correspond à la phase au cours de laquelle l'éditeur- émetteur 10 crée un site Internet personnalisé 31sl, 32sl, 33sl, 34sl, 35sl, Nsl, à chaque client et/ou prospect 11, 12, 13, 14, 15,... N. Cette étape permet de compléter les informations de la banque de données 20, comme le montre la flèche B.

Le bloc 22 correspond à la création de portails Internet 51 p, 52p, 53p permettant de regrouper les sites Internet 31sl, 32sl, 33sl, 34sl, 35sl, Nsl, des clients et/ou prospects 11, 12, 13, 14, 15,... N selon leurs intérêts ou leur localisation ou selon d'autres critères.

Ce procédé résout en soi plusieurs problèmes de communication et plus exactement de transmission et de réception de données et d'informations en offrant la possibilité d'actualiser en permanence ces informations et de les diffuser largement. En outre, l'un des problèmes récurrents en matière de recherche d'informations est la complexité et la difficulté de trouver des données très ciblées parmi la masse des données disponibles. Malgré la qualité des moteurs de recherches existants sur Internet, leur efficacité est souvent mise en échec en raison de la quantité des données répondant aux mêmes critères de recherches. Ce fait est à l'origine de la saturation des moteurs de recherches et l'on constate que la difficulté ne vient pas des moteurs de recherches eux-mêmes, mais de la classification des données par critères sélectifs et de la tenue à jour de ces données. La présente invention, notamment par la création des portails Internet, apporte les solutions adaptées qui permettent d'assurer une communication ciblée et la création quasi automatique des sites Internet permet d'assurer l'actualisation permanente des informations.

La présente invention n'est pas limitée à la forme de mise en oeuvre décrite, mais s'étend à diverses variantes évidentes pour l'homme de l'art en restant dans le cadre des revendications annexées.

## Revendications

1. Procédé de communication ciblée, mis en oeuvre dans le cadre d'une campagne de prospection commerciale par un utilisateur (10), ce procédé comportant :
(a) - une première phase de création par ledit utilisateur (10), d'une banque de données (20) contenant des fiches individuelles de clients et/ou de prospects (11, 12, 13, 14, 15,..N),
(b) - une deuxième phase de création par l'utilisateur (10) d'un support médiatique personnalisé (11a, 12a, 13a, 14a, 15a,. Na), ce support médiatique personnalisé étant destiné à un client ou un prospect de ladite banque de données (20),
**caractérisé en ce qu'**il comporte :
(c) - une troisième phase d'attribution par l'utilisateur (10), d'un identifiant (11b, 12b, 13b, 14b, 15b,.. Nb) et d'un code d'accès (11c, 12c, 13c, 14c, 15c,..Nc) spécifiques à chaque client ou prospect, et
(d) - une quatrième phase qui consiste à envoyer ledit support médiatique personnalisé (11 a, 12a, 13a, 14a, 15a,.. Na) muni de son identifiant (11 b, 12b, 13b, 14b, 15b,.. Nb) et de son code d'accès (11c, 12c, 13c, 14c, 15c,.. Nc) respectivement aux clients et /ou prospects (11, 12, 13, 14, 15,.. N) ciblés.

2. Procédé selon la revendication 1, **caractérisé en ce que** l'on incite ledit client et/ou prospect (11, 12, 13, 14, 15,.. N) ayant reçu ledit support médiatique personnalisé (11a, 12a, 13a, 14a, 15a,.. Na), à entrer sur un site Internet de l'utilisateur (10) au moyen de l'identifiant (11b, 12b, 13b, 14b, 15b,.. Nb) et du code d'accès (11c, 12c, 13c, 14c, 15c,.. Nc) qui lui ont été attribués et on complète la fiche individuelle dudit client par des données complémentaires qui lui sont demandées au moment de sa connexion audit site Internet de l'utilisateur (10).

3. Procédé selon la revendication 2, **caractérisé en ce que** l'on utilise les informations contenues sur chacune desdites fiches individuelles dudit client et/ou prospect (11, 12, 13, 14, 15,.. N), ces données comprenant les données initiales et lesdites données complémentaires, pour créer un site Internet (31sl, 32sl, 33sl, 34sl, 35sl,..Nsl) de ces clients et/ou prospects (11, 12, 13, 14, 15,.. N).

4. Procédé selon la revendication 3, **caractérisé en ce que** l'on crée des portails Internet (51 p, 52p, 53p) qui regroupent les sites Internet (31sl, 32sl, 33sl, 34sl, 35sl, Nsl), élaborés pour le compte de clients et/ou de prospects (11, 12, 13, 14, 15,.. N).

5. Procédé selon la revendication 4, **caractérisé en ce que** l'on crée lesdits portails Internet (51p, 52p, 53p) selon des critères prédéterminés adaptés aux clients et/ou aux prospects.

6. Procédé selon la revendication 5, **caractérisé en ce que** l'on classe les sites Internet (31sl, 32sl, 33sl, 34sl, 35sl, Nsl), élaborés pour le compte de clients et/ou de prospects (11, 12, 13, 14, 15,.. N) selon des critères de localisation géographique pour créer les portails Internet (51 p, 52p, 53p).

7. Procédé selon la revendication 5, **caractérisé en ce que** l'on classe les sites Internet (31sl, 32sl, 33sl, 34sl, 35sl, Nsl), élaborés pour le compte de clients et/ou de prospects (11, 12, 13, 14, 15,.. N) selon des critères d'activités professionnelles pour créer les portails Internet (51 p, 52p, 53p).

8. Procédé selon la revendication 5, **caractérisé en ce que** l'on classe les sites Internet (31sl, 32sl, 33sl, 34sl, 35sl, Nsl), élaborés pour le compte de clients et/ou de prospects (11, 12, 13, 14, 15,.. N) selon des critères d'intérêts spécifiques pour créer les portails Internet (51 p, 52p, 53p).
